# EUROPÄISCHE PATENTSCHRIFT

(11) **EP 2 724 858 B1**
(45) Veröffentlichungstag und Bekanntmachung des Hinweises auf die Patenterteilung: **05.12.2018**
(21) Anmeldenummer: 14152651.7
(22) Anmeldetag: 27.08.2010
(51) Int. Cl.: D01D 5/30, D01F 1/04, D21H 21/40, B32B 3/08, B32B 5/08, B32B 5/14, B32B 27/08, B32B 27/28, B32B 27/30, B32B 27/32, B32B 27/36, B32B 27/40, C09J 7/22, C09J 7/30

(54) **Dokument mit Melierfasern und Verfahren zu dessen Herstellung**
Document comprising mottling fibres and manufacturing method thereof
Document avec des fibres colorées et son procédé de production

(30) Priorität: 08.09.2009 DE 102009040746
(43) Veröffentlichungstag der Anmeldung: 30.04.2014
(62) Teilanmeldung aus: 10754421.5
(73) Patentinhaber: Bundesdruckerei GmbH, 10969 Berlin (DE)
(72) Erfinder: Krüger, Per, 14197 Berlin (DE); Mombrée, Alexander, 10829 Berlin (DE)
(74) Vertreter: Bressel, Burkhard

(56) Entgegenhaltungen:
- WO-A1-98/54413
- DE-A1- 10 324 630

## Beschreibung

### Gebiet der Erfindung

Die Erfindung betrifft ein Dokument mit Melierfasern gemäß Anspruch 1 und ein Verfahren zu dessen Herstellung. gemäß Anspruch 13

### Stand der Technik

Aus dem Stand der Technik sind Verfahren zur Herstellung von lumineszierenden Melierfasern sowie Verfahren zu deren Einbringung insbesondere in Papiere bei deren Herstellung bekannt. Aus der DE 41 33 977 A1 ist ein Verfahren zum Färben organischer Fasern bekannt, welches sich gegenüber dem Stand der Technik, der Spinnfärbung, durch das Anfärben kleiner Fasermengen mit einer wässrigen Lösung eines kationischen Polymers und danach mit einer wässrigen Suspension eines Pigments auszeichnet. Die zum Anfärben verwendbaren Partikel sollten möglichst eine Teilchengröße < 10 µm besitzen.

Aus der DE 37 19 48 A ist ein Verfahren zur Herstellung hofbildender Melierfasern bekannt. Derartige Melierfasern geben beim Trocknen des Papiers, in welche die Melierfasern eingebracht werden, Farbe ab, sodass um die Melierfasern herum ein Hof entsteht, sodass das Entfernen von Fasern leicht beobachtet werden kann.

Aus der EP 1 268 935 B1 ist ein Sicherheitspapier mit Melierfasern bekannt, bei welchem verschieden lumineszierende Melierfasern zum Zwecke der Codierung in verschiedene Teilbereiche des Papiers eingebracht werden. Die Lumineszenzstoffe können in die Melierfasern eingebracht oder nur oberflächlich auf diese aufgebracht sein. Als lumineszierende Eigenschaften werden zum Beispiel die Lumineszenzwellenlänge oder die Abklingzeit der Lumineszenzstrahlung genannt. Nachteil dieses Standes der Technik ist es, dass die Art des eingebrachten Musters stark beschränkt ist. So sind in der EP 1 268 935 B1 nur Streifenmuster offenbart. Weiter kann das Verfahren zur Herstellung eines derartigen Sicherheitspapiers nicht zur Herstellung von kunststoffbasierenden Dokumenten eingesetzt werden, da die Melierfasern auf einer festen Kunststoffoberfläche lose liegen und sich daher beliebig verteilen würden und sich so das aufgebrachte Muster nicht wiedergeben würde.

Aus der DE 103 24 630 A1 ist ein Sicherheitspapier mit wenigstens einer Art von Melierfasern zur Herstellung von Wertdokumenten aus Sicherheitspapier, wie Banknoten, bekannt. Die Melierfasern enthalten lumineszierende Stoffe mit charakteristischen Lumineszenzeigenschaften. Diese Melierfasern können als Bikomponentenfasern ausgeführt sein, wobei eine Kern-Mantel-Struktur gebildet wird. Besonders vorteilhaft ist es, wenn der Mantel niedrigschmelzend ist und vorzugsweise im Temperaturbereich von 95 bis 150 °C anschmilzt. Diese Fasern weisen eine verbesserte Haftung in dem Substrat auf, wobei die Melierfasern während der Papierherstellung zugegeben werden. Die Herstellung der Melierfasern kann zum Beispiel über Schmelzspinn-, Nassspinn- oder Trockenspinnverfahren erfolgen. Die Melierfasern weisen eine besondere geometrische Form auf, und in dieser geometrischen Form kann eine Information codiert sein. Nachteilig ist jedoch, dass eine Verifikation solcher Fasern technische Hilfsmittel benötigt und zeitaufwendig ist. Zum Beispiel kann die Form der Melierfasern unter einem Lichtmikroskop beobachtet werden, jedoch eignet sich dieses Verfahren nicht für eine schnelle Verifikation, zum Beispiel an einem Verkaufspunkt.

Aus WO 98/54413 A1 ist ein Sicherheitspapier bekannt, bei dem ein Faden mittels eines Klebers in das Papier eingebettet wird. Zum Verbinden des Fadens mit dem Papier können Wärme und Druck eingesetzt werden, beispielsweise indem der Faden mit einer Walze in das Papier hineingewalzt wird. Der Faden kann bereits einen Kleber aufweisen. Beim Einpressen des Fadens in das Papier wird der Faden verformt. Sowohl der Faden als auch der Kleber können fluoreszierende Materialien enthalten.

### Problem nach dem Stand der Technik und Aufgabe der Erfindung

Es ist nicht möglich, gezielt, insbesondere in strukturierter Weise, Melierfasern auf eine Kunststofffolie aufzubringen, da keine ausreichende Haftfestigkeit zwischen den Melierfasern und der Kunststofffolie besteht. Weiter besteht das Problem, dass sich die Melierfasern bei der Einbringung in Dokumente, welche mittels Lamination aus Kunststofffolien hergestellt werden, bis zur Lamination leicht wieder von den Kunststofffolien lösen. Hierdurch wird die Herstellungsumgebung mit Melierfasern kontaminiert, was dazu führt, dass Melierfasern in allen Dokumenten gefunden werden können, welche in dieser Herstellungsumgebung erzeugt werden, auch wenn diese keine oder andere Melierfasern enthalten sollen.

Es stellt sich somit die Aufgabe, eine Folie bereitzustellen, welche Melierfasern aufweist, wobei sich die Melierfasern nicht von der Folie lösen und die Herstellungsumgebung nicht kontaminieren können. Ferner besteht die Aufgabe darin, ein Verfahren bereitzustellen, mit dem eine derartige Folie hergestellt werden kann, sowie ein Verfahren zur Herstellung eines Dokuments, das aus der Folie oder aus mehreren derartiger Folien herstellbar ist.

### Beschreibung der Erfindung und bevorzugte Ausführungsformen

Diese Aufgaben werden durch ein Dokument mit Melierfasern nach Patentanspruch 1, das einen laminierten Kartenkörper aufweist, der mittels Lamination aus Kunststofffolien hergestellt ist, sowie ein Verfahren zur Herstellung eines derartigen Dokuments gemäß Patentanspruch 13 gelöst. Bevorzugte Ausführungsformen der Erfindung sind in den Unteransprüchen angegeben.

Die vorgenannten Aufgaben werden erfindungsgemäß insbesondere dadurch gelöst, dass die Melierfasern auf der Kunststofffolie fixiert sind. Darin soll einbezogen sein, dass die Melierfasern auch in die Oberfläche der Kunststofffolie eingedrückt sind. Insbesondere sind die Melierfasern auf mindestens einer Seite der Kunststofffolie auf deren Oberfläche fixiert. Die Melierfasern befinden sich in dem laminierten Kartenkörper innenliegend.

Die Kunststofffolie ist aus Polycarbonat (PC), insbesondere Bisphenol-A-Polycarbonat, gebildet. Ferner kann es sich um eine koextrudierte Kunststofffolie und andere Hybridmaterialien handeln, welche unter anderen Polycarbonat enthalten.

Ein Hauptvorteil der Erfindung besteht darin, dass die Melierfasern in kontrollierter Weise auf die Kunststofffolie aufgebracht und fixiert werden. Die Kunststofffolien mit darauf fixierten Melierfasern können als Halbzeug gesondert hergestellt, gelagert, transportiert und schließlich weiter verarbeitet werden. Hierdurch kann die Herstellungsumgebung, in welcher sich freie, nicht fixierte Melierfasern befinden, von der Herstellungsumgebung eines Dokuments, insbesondere zum Zusammentragen der Folien und zur Lamination der Folien, getrennt werden, wodurch es einfach möglich ist, verschiedene Dokumente mit verschiedenen Melierfasern in einer Herstellungsumgebung zu erzeugen.

Die Melierfasern sind wenigstens teilweise aus einem Kleber gebildet. Mittels dieses Klebers werden die Melierfasern auf der Kunststofffo
lie fixiert. Der Vorteil liegt darin, dass der Kleber nur an den Stellen in ein Dokument eingetragen wird, wo dieser für die Fixierung der Melierfasern benötigt wird.

Die Melierfasern weisen wenigstens einen ersten Teilbereich und wenigstens einen zweiten Teilbereich auf. Der wenigstens eine erste und der wenigstens eine zweite Teilbereich sind quer zur Faserrichtung nebeneinander und bevorzugt parallel zueinander angeordnet. Zumindest der wenigstens eine erste Teilbereich ist aus dem Kleber gebildet. Der Vorteil dieser Ausführungsform ist, dass die Menge an Kleber, welcher auf die Kunststofffolie aufgebracht wird, gering sein kann, da die Melierfasern in dem wenigstens einen zweiten Teilbereich aus einem anderen Material gebildet sein können. Der Kleber ist ein Hotmelt-Kleber, dessen Glasübergangs- bzw. Schmelzpunkt unterhalb des Glasübergangs- bzw. Schmelzpunktes von Polycarbonat liegt. Der erste Teilbereich wird beim Laminieren verformt.

In einer bevorzugten Ausführungsform der Erfindung ist der wenigstens eine zweite Teilbereich der Melierfasern von dem wenigstens einen ersten Teilbereich sowie gegebenenfalls weiteren Teilbereichen der Melierfasern zumindest vor deren Fixierung auf der Kunststofffolie von dem wenigstens einen ersten Teilbereich ummantelt. Beim Fixieren der Melierfasern auf der Kunststofffolie kann die Ummantelung des zweiten Teilbereiches durch den Kleber aufgehoben werden, wenn der Kleber beim Klebevorgang beispielsweise zerfließt, sodass der zweite Teilbereich zumindest teilweise freigelegt wird. Der Vorteil dieser Ausführungsform ist es, dass unabhängig von der Orientierung der Melierfasern auf der Kunststofffolie ein für die Fixierung notwendiger Kontakt zwischen dem ersten Teilbereich und der Kunststofffolie hergestellt wird. Somit kann die Melierfaser besonders fest auf der Kunststofffolie fixiert werden.

In einer weiteren bevorzugten Ausführungsform der Erfindung weisen die Melierfasern ferner wenigstens einen dritten Teilbereich auf. Der wenigstens eine zweite Teilbereich und der wenigstens eine dritte Teilbereich sind zumindest vor dem Fixieren der Melierfasern auf der Kunststofffolie von dem wenigstens einen ersten Teilbereich ummantelt. Auch in diesem Falle wird ein besonders inniger Kontakt zwischen den Melierfasern und der Kunststofffolie hergestellt. Durch Verwendung des wenigstens einen zweiten und des wenigstens einen dritten Teilbereiches in den Melierfasern können die Melierfasern als ein komplexeres Sicherheitsmerkmal eingesetzt werden. Grundsätzlich können natürlich auch wenigstens ein vierter Teilbereich sowie weitere Teilbereiche vorgesehen sein.

Der Kleber ist ein Hotmelt-Kleber. Beispielsweise weist der Hotmelt-Kleber eine Erweichungstemperatur von 50 bis 200 °C, bevorzugt von 80 bis 120 °C, auf. Der Kleber ist bei Raumtemperatur vorzugsweise nicht klebrig. Somit lassen sich die Melierfasern während der Verarbeitung bei Raumtemperatur gut vereinzeln und auf die Kunststofffolie aufbringen und fixieren.

In einer weiteren bevorzugten Ausführungsform der Erfindung besteht der wenigstens eine zweite Teilbereich der Melierfasern aus Polyamid (PA) oder einem Polyamid-Copolymer. Insbesondere können die Polyamide PA12, PA6 und PA6.6 verwendet werden. PA6 entsteht durch Ringöffnungspolymerisation aus ε-Caproiactam. PA6.6 (Nylon®) wird aus Hexamethylendiamin und Adipinsäure durch Polykondensation unter Wasserabspaltung hergestellt. Weiter können auch Polyethylen (PE), Polyethylenterephthalat (PET), Polyvinylchlorid (PVC), Cellulose sowie deren Derivate, zum Beispiel Viskose oder Cellophan, eingesetzt werden. Polyamid ist jedoch bevorzugt, da dieses Material die geringste Wechselwirkung zu den üblichen, in der Personalisierung von Dokumenten eingesetzten Lasersystemen aufweist. Insbesondere wird das Dokumentmaterial bei Verwendung von PA auch in den Bereichen durch den Laserstrahl wie gewünscht geschwärzt, in denen sich Melierfasern befinden.

Die Melierfasern können hinsichtlich ihrer Form und Größe unterschiedlich gewählt sein. Zur Charakterisierung werden im Allgemeinen die Länge, der Durchmesser und die Querschnittsform der Melierfaser herangezogen. Eine typische Länge einer Melierfaser liegt im Bereich von 2 und 25 mm, bevorzugt bei etwa 6 mm. Der Durchmesser liegt beispielsweise im Bereich von 20 bis 150 µm und bevorzugt im Bereich von 50 bis 60 µm. Die Querschnittsform ist bevorzugt rund (kreisförmig) oder oval.

In einer weiteren bevorzugten Ausführungsform der Erfindung weisen die Melierfasern einen ersten und einen zweiten Lumineszenzstoff auf. Der erste Lumineszenzstoff emittiert unter ersten Anregungsbedingungen erstes Lumineszenzlicht und der zweite Lumineszenzstoff unter zweiten Anregungsbedingungen zweites Lumineszenzlicht. Hierbei sind die ersten und die zweiten Anregungsbedingungen nicht identisch, und das erste und das zweite Lumineszenzlicht unterscheiden sich spektral. Ein Vorteil der erfindungsgemäßen fluoreszierenden Melierfasern besteht darin, dass eine erhöhte Fälschungssicherheit durch die unterscheidbaren Farben des Lumineszenzlichtes unter den ersten bzw. zweiten Anregungsbedingungen erreicht werden kann. Die Farbänderung bei Änderung der Anregungsbedingungen kann visuell leicht verifiziert werden.

In einer weiteren bevorzugten Ausführungsform der Erfindung umfassen die ersten Anregungsbedingungen zur Anregung des ersten Lumineszenzstoffes Licht mit Wellenlängen im Bereich von 380 bis 300 nm. Insbesondere kann der erste Lumineszenzstoff zwar mit UV-B-, nicht aber mit UV-A-Strahlung angeregt werden, insbesondere mit 365 nm und 316 nm. Bei geeigneter Auswahl der Materialien oder einer oberflächennahen Einbringung der Melierfasern kann auch eine Anregung mittels UV-C-Strahlung mit Wellenlängen bis zu 200 nm, insbesondere 254 nm, erfolgen.

In einer weiteren bevorzugten Ausführungsform der Erfindung umfassen die zweiten Anregungsbedingungen zur Anregung des zweiten Lumineszenzstoffes Licht mit Wellenlängen im Bereich von 320 bis 300 nm. Insbesondere kann der erste Lumineszenzstoff nicht mit UV-A-sondern nur mit UV-B-Strahlung angeregt werden, insbesondere nicht mit 365 nm, sondern nur mit 316 nm.

In einer bevorzugten Ausführungsform der Erfindung weisen die Melierfasern wenigstens einen ersten Teilbereich und wenigstens einen zweiten Teilbereich auf. Die Teilbereiche sind quer zur Faserrichtung nebeneinander angeordnet. Zum Beispiel ist der eine Teilbereich die linke und der andere die rechte Hälfte der Faser, oder der eine Teilbereich umschließt den anderen Teilbereich, wie zum Beispiel eine Leitung in einem Kabel von einer Isolation ummantelt ist. Der wenigstens eine erste Teilbereich besteht aus einem Kleber. Der wenigstens eine erste Teilbereich und/oder der wenigstens eine zweite Teilbereich ist mit dem ersten Lumineszenzstoff markiert, und der wenigstens eine erste Teilbereich und/oder der wenigstens eine zweite Teilbereich ist mit dem zweiten Lumineszenzstoff markiert. Zwei Teilbereiche haben den Vorteil, dass es zu einer räumlichen Trennung der unterschiedlich lumineszierenden Bereiche kommen kann, die leicht visuell zu verifizieren ist.

In einer weiteren bevorzugten Ausführungsform der Erfindung enthält der wenigstens eine erste Teilbereich der Melierfasern den ersten Lumineszenzstoff und der wenigstens eine zweite Teilbereich der Melierfasern den zweiten Lumineszenzstoff.

In einer weiteren bevorzugten Ausführungsform der Erfindung enthält der wenigstens eine erste Teilbereich der Melierfasern den ersten Lumineszenzstoff und der wenigstens eine zweite Teilbereich der Melierfasern den ersten und den zweiten Lumineszenzstoff.

In einer weiteren bevorzugten Ausführungsform der Erfindung weisen die Melierfasern ferner wenigstens einen dritten Teilbereich auf, wobei der wenigstens eine zweite Teilbereich und der wenigstens eine dritte Teilbereich von dem wenigstens einen ersten Teilbereich ummantelt sind. Hierbei können der wenigstens eine zweite und der wenigstens eine dritte Teilbereich zueinander benachbart bzw. aneinander angrenzend oder voneinander beabstandet und durch den wenigstens einen ersten Teilbereich voneinander getrennt sein.

Beispielsweise können der wenigstens eine zweite Teilbereich und der wenigstens eine dritte Teilbereich gleichsam wie zwei Kerne von einer Hülle aus dem wenigstens einen ersten Teilbereich ummantelt sein, vergleichbar mit einer Leitung mit zwei Kabeln. Es ergibt sich automatisch, dass auch eine Mehrzahl an zweiten und/oder dritten sowie gegebenenfalls weiteren Teilbereichen denkbar ist. Bezeichnet man die zweiten Teilbereiche mit A und die dritten Teilbereiche mit B, so kann sich zum Beispiel das Muster ABA oder das Muster ABAB für die Einzelstränge in den Melierfasern ergeben, wobei diese drei bzw. vier Teilbereiche insgesamt von einem ersten, aus einem Kleber bestehenden Teilbereich ummantelt sind.

In einer weiteren bevorzugten Ausführungsform der Erfindung sind die Lumineszenzstoffe der Melierfasern anorganische Pigmente. Insbesondere kann es sich bei den Lumineszenzstoffen um Seltenerd-dotierte Oxide, Oxinate, Sulfide, Oxysulfide, Phosphate oder Vanadate handeln. Zur Seltenerd-Dotierung werden insbesondere Europium, Gadolinium, Terbium, Dysprosium, Holmium, Erbium und Thulium verwendet. Beispielhaft seien als mögliche Pigmente LUMILUX® CD740 (rot) und CD702 (grün) von Honeywell genannt. Vorteilhaft sind Pigmente mit einer Partikelgröße kleiner oder gleich 10 µm, bevorzugt kleiner oder gleich 8 µm und besonders bevorzugt kleiner oder gleich 6 µm. Die anorganischen Pigmente weisen eine Temperaturstabilität auf, welche oberhalb der Erweichungstemperatur des verwendeten Polymers liegt.

In einer weiteren bevorzugten Ausführungsform der Erfindung sind die Melierfasern auf der Oberfläche der Folie räumlich strukturiert angeordnet. Beispielsweise werden die Melierfasern in Form von Streifen auf die Folie aufbracht, sodass es auf der Folie streifenförmige Bereiche gibt, in welchen Melierfasern vorhanden sind, und streifenförmige Bereiche, in welchen keine Melierfasern vorhanden sind. Weiter können die Bereiche, welche Melierfasern aufweisen, zum Beispiel die Form von Wappen, Siegeln oder anderen Mustern annehmen.

In einer weiteren bevorzugten Ausführungsform der Erfindung sind die verschiedenen Arten der Melierfasern unterschiedlich räumlich strukturiert angeordnet. Beispielsweise werden die Melierfasern in Form von Streifen auf die Folie aufbracht, sodass es auf der Folie erste streifenförmige Bereiche gibt, in welchen eine erste Sorte von Melierfasern vorhanden ist, es auf der Folie ferner zweite streifenförmige Bereiche gibt, in welchen eine zweite Sorte von Melierfasern vorhanden ist, und dritte streifenförmige Bereiche, in welchen keine Melierfasern vorhanden sind. Weiter können die Bereiche, welche eine bestimmte Sorte von Melierfasern aufweisen, zum Beispiel die Form von Wappen oder Siegeln annehmen, während die andere Sorte zum Beispiel flächig aufgebracht ist.

In einer weiteren bevorzugten Ausführungsform der Erfindung unterscheiden sich die wenigstens zwei voneinander verschiedenen Arten von Melierfasern dadurch, dass die Melierfasern mit unterschiedlichen Lumineszenzstoffen markiert sind. Die unterschiedlichen Lumineszenzstoffe unterscheiden sich derart, dass diese spektral unterschiedliches Lumineszenzlicht emittieren.

In einer weiteren bevorzugten Ausführungsform der Erfindung ist eine erste Art von Melierfasern auf wenigstens einer ersten Teilfläche der Kunststofffolie angeordnet und fixiert und eine zweite Art von Melierfasern auf wenigstens einer zweiten Teilfläche der Kunststofffolie angeordnet und fixiert. Die Anordnung der unterschiedlichen Arten der Melierfasern auf der Kunststofffolie bildet ein Muster. Mögliche Muster sind zum Beispiel Wappen, Siegel, eine Wertzahl oder eine codierte Information.

Das Verfahren zur Herstellung der Kunststofffolie mit darauf fixierten Melierfasern umfasst das Bereitstellen der Kunststofffolie, die Aufbringung der Melierfasern auf mindestens eine Oberfläche der Kunststofffolie sowie das Fixieren der Melierfasern auf der Kunststofffolie.

In einer bevorzugten Ausführungsform des erfindungsgemäßen Verfahrens werden die Melierfasern mittels Wärme fixiert. Beispielsweise wird die Folie nach der Aufbringung der fluoreszierenden Melierfasern unter einem IR-Strahler durchgeführt oder durch einen Rollenlaminator geführt, sodass der Kleber der Melierfasern weich wird oder sich verflüssigt und somit die Melierfasern auf der Folie fixiert werden. Alternativ kann die Folie nach der Aufbringung der Melierfasern in einen Ofen eingebracht werden, welcher die Folie auf eine Temperatur erwärmt, welche oberhalb der Erweichungstemperatur des Klebers, aber unterhalb der Erweichungstemperatur der Folie liegt.

Die Melierfasern, welche für die Fixierung wenigstens teilweise aus einem Hotmelt-Kleber gebildet sind, werden mittels Wärme auf der Kunststofffolie fixiert.

In einer weiteren bevorzugten Ausführungsform des Verfahrens werden die Melierfasern nur auf wenigstens eine erste Teilfläche der Folie aufgebracht. Beispielsweise werden die Melierfasern streifenförmig auf die Folie aufgebracht. Dies kann zum Beispiel mittels Aufsprühen, Aufstreuen oder Aufdrucken erfolgen. Die Melierfasern können auch zum Beispiel in Form von Wappen oder Siegeln aufgebracht werden. Dies kann durch Aufstempeln oder Aufdrucken erfolgen.

In einer weiteren bevorzugten und zur vorstehend beschriebenen alternativen Ausführungsform des erfindungsgemäßen Verfahrens werden die Melierfasern ganzflächig auf die Folie aufgebracht. Die Melierfasern werden jedoch nur auf wenigstens einer ersten Teilfläche der Folie fixiert. Dies erfolgt zum Beispiel über örtlich variierende Bestrahlung mit IR-Licht, sodass nur Melierfasern in der wenigstens einen ersten Teilfläche auf der Folie fixiert werden. Die Melierfasern, welche nicht fixiert worden sind, werden anschließend von der Folie entfernt, zum Beispiel durch Umdrehen der Folie oder durch Abblasen oder Absaugen der nicht fixierten Melierfasern.

In einer weiteren bevorzugten Ausführungsform des Verfahrens zur Herstellung der Folie werden zwei Sorten von Melierfasern auf die Folie aufgebracht. Die erste Sorte von Melierfasern wird auf wenigstens eine erste Teilfläche der Folie aufgebracht, und eine zweite Sorte von Melierfasern wird auf wenigstens eine zweite Teilfläche der Folie aufgebracht. Die erste und die zweite Sorte von Melierfasern unterscheiden sich. Insbesondere weisen die beiden Sorten unterschiedliche Fluoreszenzen auf, sodass diese bei einer visuellen Kontrolle unter UV-Anregung leicht erkannt und unterschieden werden können. Weiter können sich die erste und die zweite Sorte von Melierfasern auch in der Geometrie der Fasern unterscheiden. Zum Beispiel können diese eine unterschiedliche Länge, Form und/oder einen unterschiedlichen Durchmesser aufweisen. Ebenso können sich die erste und die zweite Sorte von Melierfasern auch ausschließlich durch ein der einen Sorte zugesetztes forensisches Merkmal unterscheiden, zum Beispiel einen up-conversion Leuchtstoff, sodass dieser Unterschied nur in einem speziell eingerichteten Labor beobachtet werden kann.

Weiter betrifft die Erfindung ein Dokument unter Verwendung mindestens einer Kunststofffolie mit darauf fixierten Melierfasern. Bei dem Dokument handelt es sich bevorzugt um ein Wert- oder Sicherheitsdokument. Beispiele für Wert- oder Sicherheitsdokumente sind Reisepass, Personalausweis, Führerschein, Visum, Scheck- und Kreditkarte, Firmenausweis, Berechtigungsnachweis, Mitgliedsausweis, Geschenk- und Einkaufsgutschein sowie (Spiel)Jeton, Banknote, Scheck, Briefmarke und Steuerzeichen. Das Dokument weist einen laminierten Kartenkörper auf. Beispiele für Dokumente mit einem laminierten Kartenkörper sind insbesondere Scheck- und Kreditkarte, sowie der deutsche Führerschein.

Das erfindungsgemäße Verfahren zur Herstellung des erfindungsgemäßen Dokuments umfasst das Zusammentragen wenigstens einer Kunststofffolie mit darauf fixierten Melierfasern, wobei die Melierfasern wenigstens einen ersten Teilbereich und wenigstens einen zweiten Teilbereich aufweisen, wobei der wenigstens eine erste Teilbereich und der wenigstens eine zweite Teilbereich quer zur Faserrichtung nebeneinander angeordnet sind und zumindest der wenigstens eine erste Teilbereich aus einem Hotmelt-Kleber gebildet ist, sowie wenigstens einer weiteren Folie und Laminieren der zusammengetragenen Folien, sodass sich die Melierfasern in dem laminierten Kartenkörper innenliegend befinden und der erste Teilbereich beim Laminieren verformt wird.

Ausführungsbeispiele der Erfindung werden nun unter Bezugnahme auf die beigefügten Figuren beschrieben. Die einzelnen Figuren zeigen:
- Fig. 1 a bis g:: Melierfasern in schematischer Darstellung im Querschnitt;
- Fig. 2:: eine Melierfaser in schematischer Darstellung in Draufsicht;
- Fig. 3:: Herstellung einer Kunststofffolie mit darauf fixierten Melierfasern in schematischer Darstellung im Querschnitt;
- Fig. 4:: Herstellung eines Dokuments mit Melierfasern in schematischer Darstellung im Querschnitt;
- Fig. 5:: ein Dokument mit Melierfasern in schematischer Darstellung in Draufsicht;
- Fig. 6:: ein weiteres Dokument mit Melierfasern in schematischer Darstellung in Draufsicht;
- Fig. 7:: einen weiteren Herstellungsweg einer Kunststofffolie mit darauf fixierten Melierfasern in schematischer Darstellung im Querschnitt.

Gleiche Bezugsziffern bezeichnen nachfolgend gleiche Elemente.

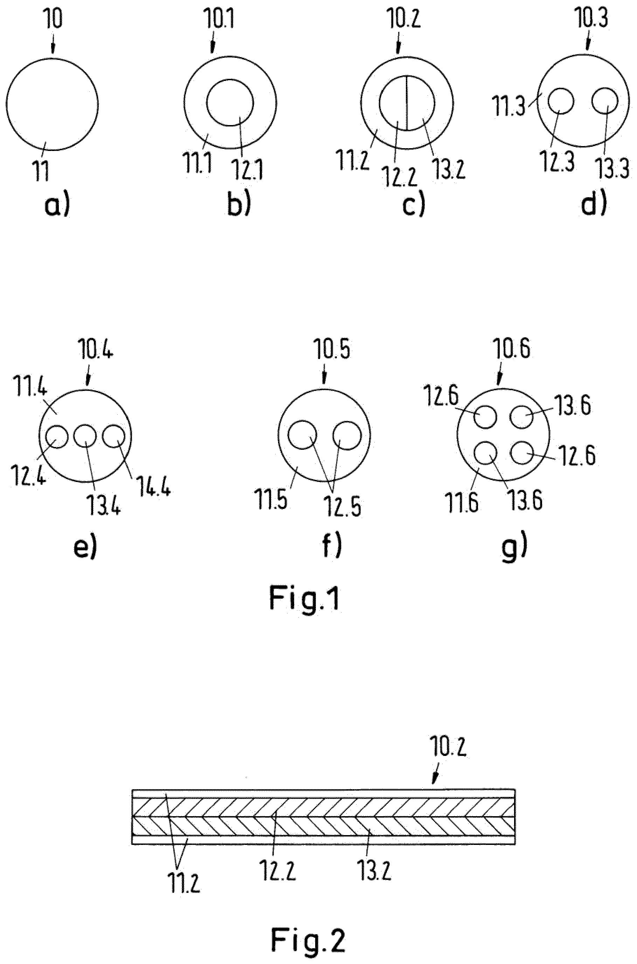

In Fig. 1 sind Melierfasern schematisch im Querschnitt dargestellt. Die Größen sind nicht maßstabsgetreu dargestellt, sondern sollen nur die räumliche Anordnung von deren Bestandteilen zueinander verdeutlichen.

In Fig. 1a ist eine Melierfaser 10 im Querschnitt dargestellt, welche ausschließlich aus einem ersten Teilbereich 11 besteht. Der erste Teilbereich besteht aus einem Kleber. Der Kleber enthält einen ersten und optional einen zweiten Lumineszenzstoff, sodass die Melierfaser 10 unter ersten Anregungsbedingungen anderes Lumineszenzlicht emittiert als unter zweiten Anregungsbedingungen. Vorteil der dargestellten Melierfaser 10 ist die einfache Herstellung in einem Verfahrensschritt. Da die beiden Lumineszenzstoffe jedoch räumlich nicht voneinander getrennt sind, ist eine Nachstellung verhältnismäßig einfach.

In Fig. 1b ist eine weitere Melierfaser 10.1 dargestellt, welche aus einem ersten Teilbereich 11.1 und einem zweiten Teilbereich 12.1 besteht. Der erste Teilbereich 11.1 besteht aus einem Kleber und ummantelt den zweiten Teilbereich 12.1. Beispielsweise bestehen der Kleber aus einem Hotmelt-Kleber und der zweite Teilbereich aus Polyamid. Beispielsweise sind ein erster Lumineszenzstoff in dem ersten Teilbereich 11.1 und optional ein zweiter Lumineszenzstoff in dem zweiten Teilbereich 12.1 enthalten. Ein Vorteil dieser Ausführungsform ist die erleichterte visuelle Erkennung aufgrund des sehr unterschiedlichen Intensitätsprofils und der unterschiedlichen spektralen Charakteristik des ersten und des zweiten Lumineszenzlichtes. Weiter ist vorteilhaft, dass durch die unterschiedlichen Eigenschaften der Materialien eine zerstörungsfreie Heraustrennung einer Melierfaser 10.1 aus einem Dokument nicht mehr möglich ist, da der Kleber des Teilbereiches 11.1 eine feste Bindung zum Dokument herstellen kann.

In Fig. 1c ist eine weitere Melierfaser 10.2 dargestellt, welche aus einem ersten Teilbereich 11.2, einem zweiten Teilbereich 12.2 und einem dritten Teilbereich 13.2 besteht. Beispielsweise können ein erster Lumineszenzstoff im zweiten Teilbereich 12.2 und ein zweiter Lumineszenzstoff im dritten Teilbereich 13.2 enthalten sein. In dieser Ausführungsform könnte die Dicke des ersten Teilbereiches 11.2, welcher aus dem Kleber besteht, sehr dünn ausfallen, da dieser nur die Haftung zwischen der Melierfaser und der Kunststofffolie vermitteln muss.

In Fig. 1d ist eine weitere Melierfaser 10.3 dargestellt, welche aus einem ersten Teilbereich 11.3, einem zweiten Teilbereich 12.3 und einem dritten Teilbereich 13.3 besteht. Der Aufbau dieser Melierfaser entspricht dem der Melierfasern von Fig. 1c, wobei der zweite Teilbereich 12.3 und der dritte Teilbereich 13.3 durch den ersten Teilbereich 11.3 getrennt sind. Eine solche Melierfaser kann zum Beispiel durch Verbinden zweier Melierfasern nach dem Stand der Technik mittels eines Klebers, welcher den ersten Teilbereich 11.3 bildet, hergestellt werden.

In Fig. 1e ist eine weitere Melierfaser 10.4 dargestellt, welche aus einem ersten Teilbereich 11.4, einem zweiten Teilbereich 12.4, einem dritten Teilbereich 13.4 und einem vierten Teilbereich 14.4 besteht. Beispielsweise weisen der zweite Teilbereich einen ersten Lumineszenzstoff, der dritte Teilbereich einen zweiten Lumineszenzstoff und der vierte Teilbereich einen dritten Lumineszenzstoff auf. Der erste Teilbereich besteht aus einem Kleber, welcher die Melierfaser auf einer Kunststofffolie fixieren kann. Ein Vorteil dieser Melierfaser ist die Darstellung von drei verschiedenen nebeneinander liegenden Farben, was zu einer leichten visuellen Erkennung führt. Weiter lassen sich mit drei Farben bereits die meisten Nationalfarben darstellen, sodass zum Beispiel eine länderspezifische Codierung durchgeführt werden kann.

Einen Sonderfall hiervon stellt eine Melierfaser mit einem ersten Teilbereich 11.4, zwei zweiten Teilbereichen 12.4 und 14.4 und einem dritten Teilbereich 13.4 dar. Beispielsweise enthalten die beiden zweiten Teilbereiche einen ersten Lumineszenzstoff und der dritte Teilbereich einen zweiten Lumineszenzstoff. Der erste Teilbereich 11.4 besteht aus einem Kleber.

In Fig. 1f ist eine weitere Melierfaser 10.5 dargestellt. Diese weist einen ersten, aus Kleber bestehenden Teilbereich 11.5 und zwei zweite Teilbereiche 12.5 auf. Beispielsweise enthält der erste Teilbereich 11.5 einen ersten Lumineszenzstoff, und die zweiten Teilbereiche enthalten einen zweiten Lumineszenzstoff. Ein Vorteil dieser Ausführungsform mit einer Mehrzahl von zweiten Teilbereichen besteht darin, dass bei der Herstellung der Melierfasern verursachte Unterbrechungen von Strängen der zweiten Teilbereiche visuell problemlos nicht als Störung wahrgenommen werden. Somit wird der Ausschuss reduziert.

In Fig. 1g ist eine weitere Melierfaser 10.6 dargestellt, welche einen ersten, aus Kleber bestehenden Teilbereich 11.6 sowie zwei zweite Teilbereiche 12.6 und zwei dritte Teilbereiche 13.6 aufweist. Diese Form stellt eine Kombination der in Fig. 1d und Fig. 1f dargestellten Melierfasern dar, welche die Vorteile der einfachen und sicheren Verifikation und der ausschussarmen Herstellung kombiniert.

In Fig. 2 ist eine Melierfaser 10.2 gemäß Fig. 1c in Draufsicht dargestellt. Diese weist einen ersten Teilbereich 11.2 auf, welcher aus Kleber besteht. Des Weiteren weist die Melierfaser einen zweiten Teilbereich 12.2, welcher einen ersten Lumineszenzstoff enthält, sowie einen dritten Teilbereich 13.2 auf, welcher einen zweiten Lumineszenzstoff enthält. Bei der visuellen Verifikation der Melierfaser ergibt sich das Bild zweier nebeneinander liegender, verschiedenfarbig lumineszierender Streifen. Die typische Länge einer solchen Melierfaser beträgt durchschnittlich etwa 6 mm.

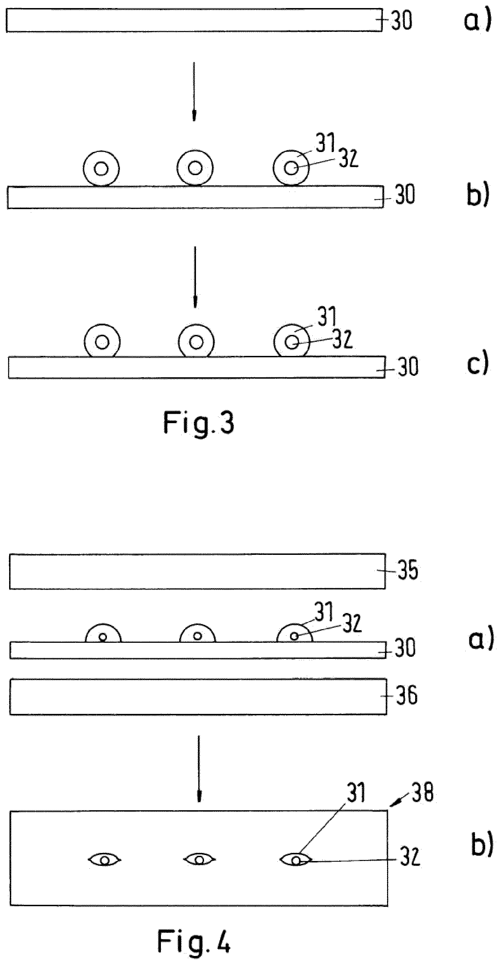

In Fig. 3 ist schematisch die Herstellung einer Kunststofffolie mit darauf fixierten Melierfasern im Querschnitt dargestellt. Im ersten Schritt (a) wird eine Kunststofffolie 30 bereitgestellt. Die Kunststofffolie 30 kann zum Beispiel aus PC bestehen. Anschließend (Schritt b) werden Melierfasern aufgebracht, welche zum Beispiel einen ersten Teilbereich 31 und einen zweiten Teilbereich 32 aufweisen. Der erste Teilbereich 31 besteht aus einem Hotmelt-Kleber, welcher bei Raumtemperatur nicht klebrig ist. So können die Melierfasern vereinzelt und verarbeitet werden. Vorzugsweise enthält der erste Teilbereich 31 einen ersten Lumineszenzstoff und der zweite Teilbereich 32 einen zweiten Lumineszenzstoff. In einem folgenden Schritt (c) werden die Melierfasern fixiert, zum Beispiel durch Erwärmen mittels einer IR-Lampe, welche den ersten Teilbereich 31 auf eine Temperatur erwärmt, bei welcher der Hotmelt-Kleber erweicht. Somit wird eine feste Bindung zwischen den Melierfasern und der Kunststofffolie 30 erreicht. Schematisch ist dies hier dadurch dargestellt, dass es hierbei zu einer Verformung des ersten Teilbereiches 31 kommen kann. Das kann vorteilhaft sein, um die Haftung der Melierfaser auf der Kunststofffolie 30 zu verbessern.

In Fig. 4 ist die Herstellung eines erfindungsgemäßen Dokuments mit Melierfasern schematisch im Querschnitt dargestellt. In einem ersten Schritt (a) werden eine Kunststofffolie 30 mit Melierfasern, welche einen ersten Teilbereich 31 und einen zweiten Teilbereich 32 aufweisen und die auf der Kunststofffolie 30 fixiert sind, sowie weitere Kunststofffolien, hier beispielhaft zwei Kunststofffolien 35 und 36, zu einem Stapel zusammengetragen. Dem Fachmann sind übliche Aufbauten von kunststoffbasierenden Dokumenten bekannt, wobei üblicherweise 3 bis 15 Kunststofffolien eingesetzt werden. Beispielsweise handelt es sich bei den Kunststofffolien 30, 35, 36 um PC-Folien, welche einen Glasübergang bei etwa 148 °C aufweisen. Diese werden unter erhöhtem Druck und erhöhter Temperatur, üblicherweise 170 bis 210 °C, für 5 bis 60 min laminiert (Schritt b). Es bildet sich ein monolithischer Kartenkörper 38. In dem monolithischen Kartenkörper 38 befinden sich die Melierfasern, wobei sich der erste Teilbereich 31, welcher aus einem Hotmelt-Kleber besteht, verformt und mit dem Dokument verbunden hat, da der Kleber einen Glasübergang beziehungsweise Schmelzpunkt unterhalb des Glasübergangs von PC und insbesondere unterhalb der Laminiertemperatur aufweist. Die zweiten Teilbereiche können vorzugsweise so gestaltet sein, dass sich deren geometrische Form unter Laminationsbedingungen nicht oder nicht wahrnehmbar ändert. Vorteilhaft ist, wenn der erste Teilbereich 31 einen ersten Lumineszenzstoff und der zweite Teilbereich 32 einen zweiten Lumineszenzstoff enthält, deren Anregungsbedingungen und emittiertes Lumineszenzlicht sich voneinander unterscheiden. Der erste Teilbereich wird bei der Verifikation nicht mehr als klar begrenzter Bereich wahrgenommen, weil er beim Laminieren in dem Dokument verschmiert ist. Durch die Verformung des ersten Teilbereiches 31 kann die Melierfaser nicht mehr als ganzes entfernt werden, sondern nur noch der zweite Teilbereich 32, sodass eine versuchte Manipulation offensichtlich wird.

Für den Fachmann ist es leicht ersichtlich, dass es sich bei der Kunststofffolie 35 zum Beispiel um ein Hologramm, zum Beispiel ein Volumenhologramm oder ein Kinegramm, handeln kann. Weiter kann es sich bei der Kunststofffolie 36 um ein so genanntes Inlay handeln, welches einen Chip und eine Antenne zur kontaktlosen Kommunikation aufweist. Ein solches Inlay kann aus einem thermoplastischen Elastomer, insbesondere thermoplastischen Polyurethan (TPU), oder einem TPU-PC-Verbund bestehen. Ebenso ist dem Fachmann bekannt, dass zur Herabsetzung der Laminationstemperatur zwischen die Kunststofffolie 30 und die Kunststofffolie 35 und/oder die Kunststofffolie 30 und die Kunststofffolie 36 ein Kleber eingebracht werden kann.

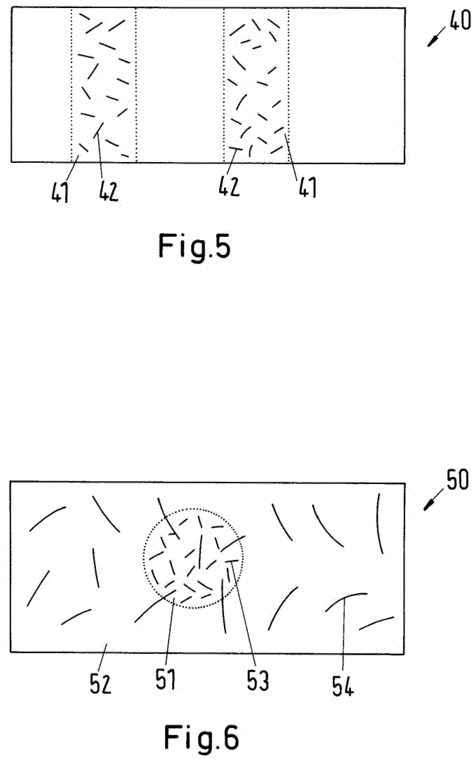

In Fig. 5 ist ein Dokument 40 mit Melierfasern 42 in Draufsicht dargestellt. Die Melierfasern befinden sich auf Teilflächen 41 des Dokuments 40. Beispielsweise sind die Teilflächen streifenförmig angeordnet. Die streifenförmigen Teilflächen können zum Beispiel einen Code, zum Beispiel einen Barcode, darstellen. Beispielsweise codiert dieser Code den Wert des Dokuments 40, zum Beispiel einer Banknote.

In Fig. 6 ist ein weiteres Dokument 50 mit Melierfasern 53, 54 in Draufsicht dargestellt. Die Melierfasern 53 befinden sich auf einer ersten Teilfläche 51 des Dokuments 50, und die Melierfasern 54 befinden sich auf einer zweiten Teilfläche 52 des Dokuments 50. Im dargestellten Fall umfasst die zweite Teilfläche 52 die gesamte Oberfläche des Dokuments. Die Melierfasern 53 unterscheiden sich im dargestellten Fall von den Melierfasern 54 durch die Länge. Beispielsweise sind die Melierfasern 53 etwa 5 mm lang, die Melierfasern 54 etwa 20 mm. Die Melierfasern können sich zusätzlich zur oder anstelle der Länge zum Beispiel auch in dem Lumineszenzfarbeindruck unterscheiden. Die erste Teilfläche 51 ist hier kreisförmig dargestellt. Es ist jedoch leicht vorstellbar, dass die erste Teilfläche 51 die Form eines Wappen oder Siegels, eines Symbols, zum Beispiel eines Adlers, oder einer Wertzahl annimmt. Weiter ist leicht erkennbar, dass mehrere erste Teilflächen gemeinsam ein Wappen oder ein Siegel, ein Symbol, zum Beispiel einen Adler, oder eine Wertzahl, insbesondere eine mehrstellige Wertzahl, darstellen können.

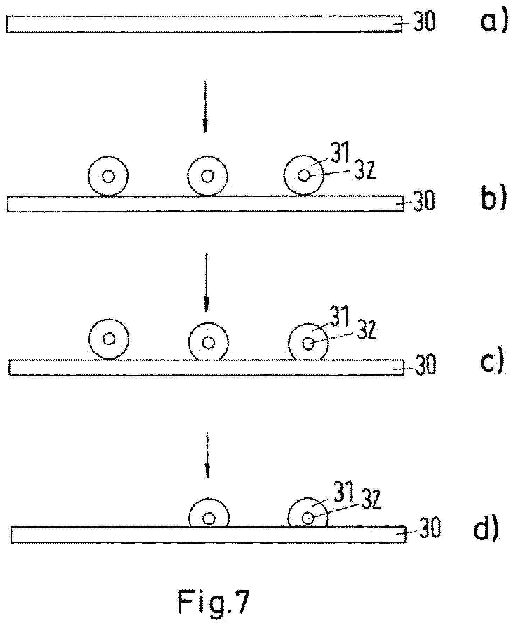

In Fig. 7 ist schematisch die Herstellung einer weiteren Kunststofffolie mit darauf fixierten Melierfasern im Querschnitt dargestellt. Im ersten Schritt (a) wird eine Kunststofffolie 30 bereitgestellt. Die Kunststofffolie 30 kann zum Beispiel aus PC bestehen. Anschließend (Schritt b) werden Melierfasern aufgebracht, welche zum Beispiel einen ersten Teilbereich 31 und einen zweiten Teilbereich 32 aufweisen. Der erste Teilbereich 31 besteht aus einem Hotmelt-Kleber, welcher bei Raumtemperatur nicht klebrig ist. So können die Melierfasern vereinzelt und verarbeitet werden. Vorzugsweise enthält der erste Teilbereich 31 einen ersten Lumineszenzstoff und der zweite Teilbereich 32 einen zweiten Lumineszenzstoff. Die Aufbringung erfolgt nicht strukturiert, insbesondere vollflächig. In einem folgenden Schritt (c) werden die Melierfasern in bestimmten vorgegebenen Teilflächen auf der Kunststofffolie fixiert, d.h. die Fixierung erfolgt strukturiert, sodass die Melierfasern nur in den Teilflächen, in welchen diese auf die Kunststofffolie 30 aufgebracht werden sollen, mit der Kunststofffolie 30 verbunden werden. Die Melierfasern werden zum Beispiel durch Erwärmen mittels einer IR-Lampe, welche den ersten Teilbereich 31 auf eine Temperatur erwärmt, bei welcher der Hotmelt-Kleber erweicht, auf der Kunststofffolie fixiert. Somit wird eine feste Bindung zwischen den Melierfasern und der Kunststofffolie 30 erreicht. In der Figur ist schematisch dargestellt, dass es hierbei zu einer Verformung des ersten Teilbereiches 31 kommen kann. Das kann vorteilhaft sein, um die Haftung der Melierfaser auf der Kunststofffolie 30 zu verbessern. In einem abschließenden Schritt (d) werden die nicht fixierten Melierfasern entfernt, zum Beispiel durch Abblasen oder Absaugen.

## Patentansprüche

1. Dokument mit Melierfasern, das einen laminierten Kartenkörper aufweist, der mittels Lamination aus Kunststofffolien hergestellt ist, wobei das Dokument unter Verwendung mindestens einer Kunststofffolie mit darauf fixierten Melierfasern gebildet ist und wobei sich die Melierfasern in dem laminierten Kartenkörper innenliegend befinden, wobei ferner die Melierfasern wenigstens einen ersten Teilbereich und wenigstens einen zweiten Teilbereich aufweisen, der wenigstens eine erste Teilbereich und der wenigstens eine zweite Teilbereich quer zur Faserrichtung nebeneinander angeordnet sind und zumindest der wenigstens eine erste Teilbereich aus einem Hotmelt-Kleber gebildet ist und wobei der erste Teilbereich beim Laminieren verformt wird.

2. Dokument nach Anspruch 1, **dadurch gekennzeichnet, dass** die Kunststofffolien aus Polycarbonat gebildet sind und dass der Glasübergangs- bzw. Schmelzpunkt des Hotmelt-Klebers unterhalb des Glasübergangs- bzw. Schmelzpunktes von Polycarbonat liegt.

3. Dokument nach einem der vorstehenden Ansprüche, **dadurch gekennzeichnet, dass** der wenigstens eine zweite Teilbereich von dem wenigstens einen ersten Teilbereich zumindest vor dem Fixieren der Melierfasern auf der Kunststofffolie von dem wenigstens einen ersten Teilbereich ummantelt ist.

4. Dokument nach einem der vorstehenden Ansprüche, **dadurch gekennzeichnet, dass** die Melierfasern ferner wenigstens einen dritten Teilbereich aufweisen und dass der wenigstens eine zweite Teilbereich und der wenigstens eine dritte Teilbereich zumindest vor dem Fixieren der Melierfasern auf der Kunststofffolie von dem wenigstens einen ersten Teilbereich ummantelt sind.

5. Dokument nach einem der vorstehenden Ansprüche, **dadurch gekennzeichnet, dass** der wenigstens eine zweite Teilbereich aus Polyamid oder einem Polyamid-Copolymer besteht.

6. Dokument nach einem der vorstehenden Ansprüche, **dadurch gekennzeichnet, dass** die Melierfasern mit einem ersten und mit einem zweiten Lumineszenzstoff markiert sind, wobei der erste Lumineszenzstoff unter ersten Anregungsbedingungen erstes Lumineszenzlicht und der zweite Lumineszenzstoff unter zweiten Anregungsbedingungen zweites Lumineszenzlicht emittieren und wobei die ersten und die zweiten Anregungsbedingungen nicht identisch sind und sich das erste und das zweite Lumineszenzlicht spektral unterscheiden.

7. Dokument nach Anspruch 6, **dadurch gekennzeichnet, dass** der wenigstens eine erste Teilbereich und/oder der wenigstens eine zweite Teilbereich mit dem ersten Lumineszenzstoff markiert ist und der wenigstens eine erste Teilbereich und/oder der wenigstens eine zweite Teilbereich mit dem zweiten Lumineszenzstoff markiert ist.

8. Dokument nach Anspruch 7, **dadurch gekennzeichnet, dass** der wenigstens eine erste Teilbereich den ersten Lumineszenzstoff und der wenigstens eine zweite Teilbereich den zweiten Lumineszenzstoff enthält.

9. Dokument nach einem der Ansprüche 7 und 8, **dadurch gekennzeichnet, dass** der wenigstens eine erste Teilbereich den ersten Lumineszenzstoff und der wenigstens eine zweite Teilbereich den ersten und den zweiten Lumineszenzstoff enthält.

10. Dokument nach einem der vorstehenden Ansprüche, **dadurch gekennzeichnet, dass** die Melierfasern auf der Kunststofffolie räumlich strukturiert angeordnet sind.

11. Dokument nach einem der vorstehenden Ansprüche, **dadurch gekennzeichnet, dass** wenigstens zwei voneinander verschiedene Arten von Melierfasern auf der Kunststofffolie räumlich strukturiert angeordnet sind.

12. Dokument nach einem der vorstehenden Ansprüche, **dadurch gekennzeichnet, dass** das Dokument ein Wert- oder Sicherheitsdokument ist.

13. Verfahren zur Herstellung eines Dokuments mit Melierfasern, umfassend folgende Verfahrensschritte:
a. Zusammentragen wenigstens einer Kunststofffolie mit darauf fixierten Melierfasern, wobei die Melierfasern wenigstens einen ersten Teilbereich und wenigstens einen zweiten Teilbereich aufweisen, wobei der wenigstens eine erste Teilbereich und der wenigstens eine zweite Teilbereich quer zur Faserrichtung nebeneinander angeordnet sind und zumindest der wenigstens eine erste Teilbereich aus einem Hotmelt-Kleber gebildet ist, sowie wenigstens einer weiteren Folie und
b. Laminieren der zusammengetragenen Folien sodass sich die Melierfasern in dem laminierten Kartenkörper innenliegend befinden und der erste Teilbereich beim Laminieren verformt wird.

## Claims

1. Document comprising mottling fibres, having a laminated card body produced from plastic films by way of lamination, with the document being formed using at least one plastic film having mottling fibres fixed thereon, and with the mottling fibres being situated inside the laminated card body, and also with the mottling fibres comprising at least one first partial region and at least one second partial region, the at least one first partial region and the at least one second partial region being arranged side by side square to the fibre direction and at least the at least one first partial region being formed from a hot melt adhesive, and with the first partial region being deformed during the lamination.

2. Document of claim 1 **characterised in that** the plastic films are formed from polycarbonate and that the glass transition point and/or melting point of the hot melt adhesive is below the glass transition point and/or melting point of polycarbonate.

3. Document of any one of the preceding claims **characterised in that** the at least one second partial region is enveloped by the at least one first partial region, at least before the fixing of the mottling fibres on the plastic film.

4. Document of any one of the preceding claims **characterised in that** the mottling fibres also comprise at least one third partial region and that the at least one second partial region and the at least one third partial region are enveloped by the at least one first partial region, at least before the fixing of the mottling fibres on the plastic film.

5. Document of any one of the preceding claims **characterised in that** the at least one second partial region consists of polyamide or of a polyamide copolymer.

6. Document of any one of the preceding claims **characterised in that** the mottling fibres are marked with a first and with a second luminescence material, with the first luminescence material emitting first luminescent light under first excitation conditions and the second luminescence material emitting second luminescent light under second excitation conditions, and with the first and the second excitation conditions not being identical and the first and the second luminescent light differing spectrally.

7. Document of claim 6 **characterised in that** the at least one first partial region and/or the at least one second partial region is marked with the first luminescence material and the at least one first partial region and/or the at least one second partial region being marked with the second luminescence material.

8. Document of claim 7 **characterised in that** the at least one first partial region contains the first luminescence material and the at least one second partial region contains the second luminescence material.

9. Document of either of claims 7 and 8 **characterised in that** the at least one first partial region contains the first luminescence material and the at least one second partial region contains the first and the second luminescence material.

10. Document of any one of the preceding claims **characterised in that** the mottling fibres are arranged spatially structured on the plastic film.

11. Document of any one of the preceding claims **characterised in that** at least two different types of mottling fibres are arranged spatially structured on the plastic film.

12. Document of any one of the preceding claims **characterised in that** the document is a value document or a security document.

13. Method for manufacturing a document comprising mottling fibres, comprising the following method steps:
a). bringing together at least one plastic film with mottling fibres fixed thereon, with the mottling fibres comprising at least one first partial region and at least one second partial region, with the at least one first partial region and the at least one second partial region being arranged side by side square to the fibre direction and at least the at least one first partial region being formed from a hot melt adhesive, and at least one other film, and
b). laminating the brought-together films so that the mottling fibres are situated inside the laminated card body and the first partial region is deformed during the lamination.

## Revendications

1. Document avec des fibres colorées qui présente un corps de carte laminé qui est fabriqué au moyen d'un laminage en films plastiques, dans lequel le document est formé en utilisant au moins un film plastique avec des fibres colorées fixées dessus et dans lequel les fibres colorées se trouvent à l'intérieur dans le corps de carte laminé, dans lequel en outre les fibres colorées présentent au moins une première zone partielle et au moins une deuxième zone partielle, l'au moins une première zone partielle et l'au moins une deuxième zone partielle sont disposées l'une à côté de l'autre transversalement au sens de fibre et au moins l'au moins une première zone partielle est formée en une colle thermofusible autoadhésive et dans lequel la première zone partielle est déformée lors du laminage.

2. Document selon la revendication 1, **caractérisé en ce que** les films plastiques sont formés en polycarbonate et que le point de transition vitreuse ou de fusion de la colle thermofusible autoadhésive se situe sous le point de transition vitreuse ou de fusion du polycarbonate.

3. Document selon l'une quelconque des revendications précédentes, **caractérisé en ce que** l'au moins une deuxième zone partielle est enveloppée par l'au moins une première zone partielle au moins avant la fixation des fibres colorées sur le film plastique par l'au moins une première zone partielle.

4. Document selon l'une quelconque des revendications précédentes, **caractérisé en ce que** les fibres colorées présentent en outre au moins une troisième zone partielle et que l'au moins une deuxième zone partielle et l'au moins une troisième zone partielle sont enveloppées au moins avant la fixation des fibres colorées sur le film plastique par l'au moins une première zone partielle.

5. Document selon l'une quelconque des revendications précédentes, **caractérisé en ce que** l'au moins une deuxième zone partielle se compose de polyamide ou d'un copolymère de polyamide.

6. Document selon l'une quelconque des revendications précédentes, **caractérisé en ce que** les fibres colorées sont marquées d'une première et d'une seconde substance luminescente, dans lequel la première substance luminescente émet, dans des premières conditions d'excitation, une première lumière luminescente et la seconde substance luminescente, dans des secondes conditions d'excitation, une seconde lumière luminescente et dans lequel les première et seconde conditions d'excitation ne sont pas identiques et la première et la seconde lumière luminescente se distinguent de façon spectrale.

7. Document selon la revendication 6, **caractérisé en ce que** l'au moins une première zone partielle et/ou l'au moins une deuxième zone partielle est marquée de la première substance luminescente et l'au moins une première zone partielle et/ou l'au moins une deuxième zone partielle, de la seconde substance luminescente.

8. Document selon la revendication 7, **caractérisé en ce que** l'au moins une première zone partielle contient la première substance luminescente et l'au moins une deuxième zone partielle, la seconde substance luminescente.

9. Document selon l'une quelconque des revendications 7 et 8, **caractérisé en ce que** l'au moins une première zone partielle contient la première substance luminescente et l'au moins une deuxième zone partielle, la première et la seconde substance luminescente.

10. Document selon l'une quelconque des revendications précédentes, **caractérisé en ce que** les fibres colorées sont disposées en étant structurées spatialement sur le film plastique.

11. Document selon l'une quelconque des revendications précédentes, **caractérisé en ce qu'**au moins deux différents types l'un de l'autre de fibres colorées sont disposés structurés spatialement sur le film plastique.

12. Document selon l'une quelconque des revendications précédentes, **caractérisé en ce que** le document est un document de valeur ou de sécurité.

13. Procédé de fabrication d'un document avec des fibres colorées, comprenant des étapes de procédé suivantes :
a. le rassemblement d'au moins un film plastique avec des fibres colorées fixées dessus, dans lequel les fibres colorées présentent au moins une première zone partielle et au moins une deuxième zone partielle, dans lequel l'au moins une première zone partielle et l'au moins une deuxième zone partielle sont disposées transversalement au sens de fibre l'une à côté de l'autre et au moins l'au moins une première zone partielle est formée en une colle thermofusible autoadhésive, ainsi qu'au moins un autre film et
b. le laminage des films rassemblés de sorte que les fibres colorées se trouvent à l'intérieur dans le corps de carte laminé et la première zone partielle soit déformé lors du laminage.
